# EUROPEAN PATENT APPLICATION

(11) **EP 2 353 830 A2**
(43) Date of publication of application: **10.08.2011**
(21) Application number: 11250124.2
(22) Date of filing: 03.02.2011
(51) Int. Cl.: B29C 43/18, F01D 5/28, F04D 29/02

(54) **Method of manufacturing a composite fan blade with co-cured sheath, and corresponding fan blade**

(30) Priority: 05.02.2010 US 701244
(71) Applicant: United Technologies Corporation, Hartford, CT 06101 (US)
(72) Inventor: Parkin, Michael, South Glastonbury, Connecticut 06073 (GB); Huth, Brian P., Westfield, Massachusetts 01085 (US); Bedard, William M., Tolland, Connecticut 06084 (US)
(74) Representative: Stevens, Jason Paul

(57) **Abstract**

The invention concerns a method of forming a composite blade (10) having a sheath (17) on a portion of the blade by placing the dry composite blade (10) and sheath (17) in a mould (32), adding a resin, and curing the resin to integrally bond the blade (10) to the metal sheath (17). The portion of the blade having the sheath bonded thereto may be at least one of the leading edge (14), the tip (20) and the trailing edge (12) of the blade.

## Description

### BACKGROUND

Composite materials offer potential design improvements in gas turbine engines. For example, in recent years composite materials have been replacing metals in gas turbine engine fan blades because of their high strength and low weight. Most metal gas turbine engine fan blades are titanium. The ductility of titanium fan blades enables the fan to ingest a bird and remain operable or be safely shut down. The same requirements are present for composite fan blades.

A composite airfoil for a turbine engine fan blade can have a sandwich construction with a carbon fibre woven core at the centre and two-dimensional filament reinforced plies or laminations on either side. To form the composite airfoil, individual two-dimensional plies are cut and stacked in a mould with the woven core. The mould is injected with a resin using a resin transfer moulding process and cured. The plies vary in length and shape. The carbon fibre woven core is designed to accommodate ply drops so that multiple plies do not end at the same location.

Each ply comprises a plurality of oriented elongated fibres. In one example, a ply can comprise a woven material or a uniweave material. With a woven material, half of the woven fibres are oriented in a first direction and half the fibres are oriented in a direction 90° from the first direction. A uniweave material, on the other hand, has about 98% of its fibres oriented in a first direction and a small number of fibres extending in a direction 90° from the first direction to stitch the uniweave material together. Other woven composite airfoils with different fibre orientation are also currently in use.

Previous composite blades have been configured to improve the impact strength of the composite airfoils so they can withstand bird strikes. During use, foreign objects ranging from large birds to hail may be entrained in the inlet of the gas turbine engine. Impact of large foreign objects can rupture or pierce the blades and cause secondary damage downstream of the blades. In addition, sheaths are used to reduce the effects of erosion during operation, as well as other conventional uses of sheaths. Sheaths may be made from a variety of materials, depending on the purpose of their use.

In order to prevent damage from the impact of foreign objects such as birds or reduce or prevent erosion, a metallic sheath has been used to protect the leading edge of rotor blades and propellers made from composites. Materials such as titanium and nickel alloys have been fitted on the leading edge of the element to be protected. Examples of sheaths used for covering and protecting a component leading edge of an airfoil component are disclosed in US 5881972 and US 5908285. In both patents, the sheaths are formed from metal that is electroformed on the airfoil component.

In more recent years, sheaths have been bonded on an already formed composite blade. Once the blade has been formed and cured in a resin transfer moulding (RTM) process or any other process for forming a blade, an adhesive is placed on the leading edge of the formed blade and a leading edge sheath is placed against the adhesive, heat and pressure are applied and the adhesive cures to mount the leading edge as needed. While this process is costly, it is also effective in producing airfoils capable of withstanding impact by birds and other debris that might otherwise damage or destroy the airfoil.

### SUMMARY

A method of forming a sheath on the leading edge of a resin transfer moulding (RTM) moulded composite blade includes the steps of forming a dry composite blade preform, placing a sheath against the intended portion of the blade, such as the leading edge, inserting both into a mould, adding the resin to fill the mould cavity, and curing the resin. The resultant blade is thus formed in a single mould process.

A primer material may be added to the surface of the dry preform or to the part of the sheath that is to contact the blade. When titanium is used as a sheath, the primer may applied by a spray, whereas if a nickel based alloy is used, the primer may be applied by dip coating the sheath bond surface prior to inserting a primed sheath and dry composite into the mould. Any appropriate primer may be used for the sheath material and resin combination. Any material that is used as a sheath is within the scope of this invention.

### BRIEF DESCRIPTION OF THE DRAWINGS

FIGS. 1a and 1b are side and top views respectively of the composite blade of this invention with a sheath.

FIG. 2 is a side view of an open mould for forming the composite blade of FIG. 2 while simultaneously bonding a sheath to the leading edge of the blade, prior to closing the mould.

FIG. 3 is a block diagram illustrating a method of forming the composite blade and sheath of this invention.

FIG. 4 is a side view of a prior art process for placing a sheath on a blade.

### DETAILED DESCRIPTION

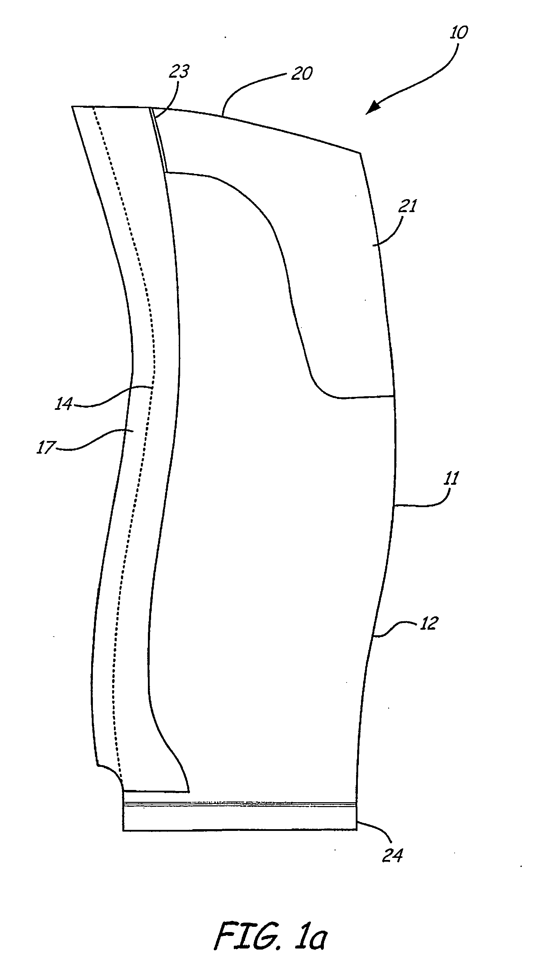

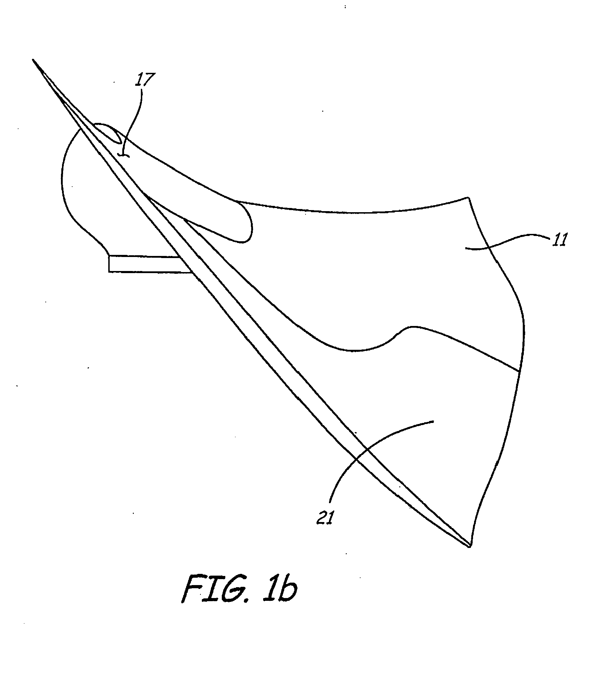

FIGS. 1 a and 1 b illustrate composite blade 10 having trailing edge 12, leading edge 14, sheath 17, tip 20, and root 24. Root 24 is illustrated as a dovetail root. However, root 24 can have any configuration that is used in blade assemblies. Sheath 17 is bonded to its leading edge 14 using the process of this invention, in which the dry composite blade 10 and the sheath 17 are placed in a mould and cured at the same time, as described hereinafter. Blade 10 is a composite preform made from a woven three dimensional centre core with laid on filament plies as describe below. Alternatively the composite may be simply a woven three dimensional core or a plurality of filament plies. Also used in the present invention are blades such as helicopter or propellers that have a foamed centre or honeycomb centre to lighten the weight of the blade. Any kind of composite blade that can be resin moulded from a dry preform is part of this invention. The method of this invention may be used with any blade having a dry composite outer surface.

Sheath 17 may be made from any of the conventional materials. For example, sheath 17 can be made from any hard material, such as titanium and nickel sheaths, and those made from alloys of these metals. Sheath 17 may be made from other metals and other materials such as ceramics, plastics such as polyurethane or epoxy filled fibre materials, and the like. Sheath 17 may have a primer or adhesive used therewith, where the primer or adhesive is applied to sheath 17 or dry preform 10 to enhance adhesion of sheath 17 to preform 10 as it is being cured to ensure that sheath 17 will remain in place during use of the final product.

FIG. 1b also illustrate how a tip cover 21 and trailing edge sheath 21 can be added to the blade 11 by providing space in the mould for those components. FIG 1a illustrates how leading edge sheath 17 is a separate component, showing break 23 is between sheath 17 and trailing edge sheath 21. It has been found that the process of this invention provides increased conformity to the junction of leading edge sheath 17, tip sheath 19 and trailing edge sheath 21 to blade 10.

A method of fabricating a composite blade 10 is disclosed in a U.S. Patent Application titled Core Driven Ply Shape Composite Fan Blade and Method of Making, filed November 30, 2009, having Serial No. 12/627,629, which is incorporated herein by reference in its entirety.

Other composite blades that are formed solely from a 3-D woven core or solely from plies are also capable of use in the present invention. Also used are those composite blades that have hollow or filled centres, such as with foam or a honeycombed structure to lighten the overall weight of the blade. All that is required of the moulded composite blade is that it be dry when inserted in the mould, cured in a mould with a resin while in contact with a sheath in the mould to thereby form a complete sheath covered blade.

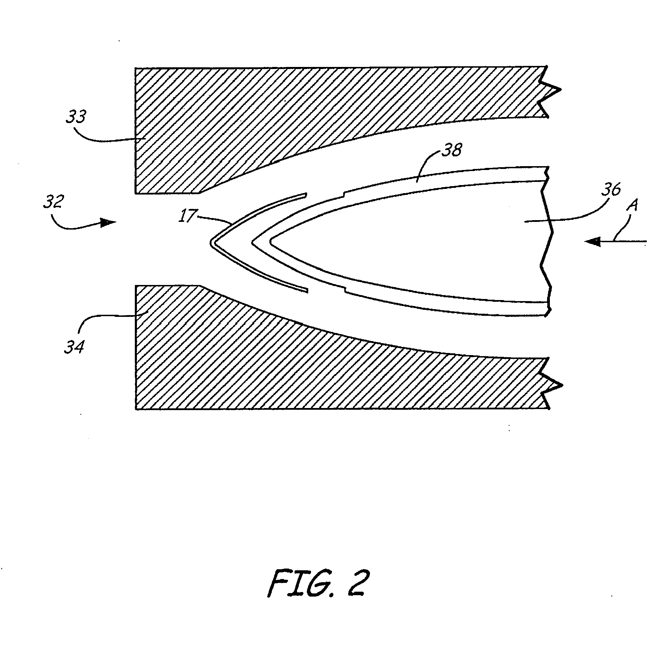

FIG. 2 illustrates one example of composite blade 10 in mould 32 having an upper mould 33 and lower mould 34. Mould 32 is designed based on the desired outside geometry of blade 10. Plies 38 and woven core 36 are stacked in mould 32 and eventually cured with a resin to form composite blade 10. Plies 38 are stacked on outer surfaces of woven core 36. Sheath 17 is then placed on top of plies 38 in mould 32. Plies 38, sheath 17 and woven core 36 occupy the entire hollow space in mould 32. As noted above, the dry composite preform can be any known form of composite, including those of both a core and plies as above or solely a core or solely plies.

In a RTM process, the mould is closed and the resin is then transferred into closed mould 32, heat is applied and the resin cures to form the finished product. It is important to have the dry blade 10 and the sheath 17 in the mould and in contact when the resin is added and cured.

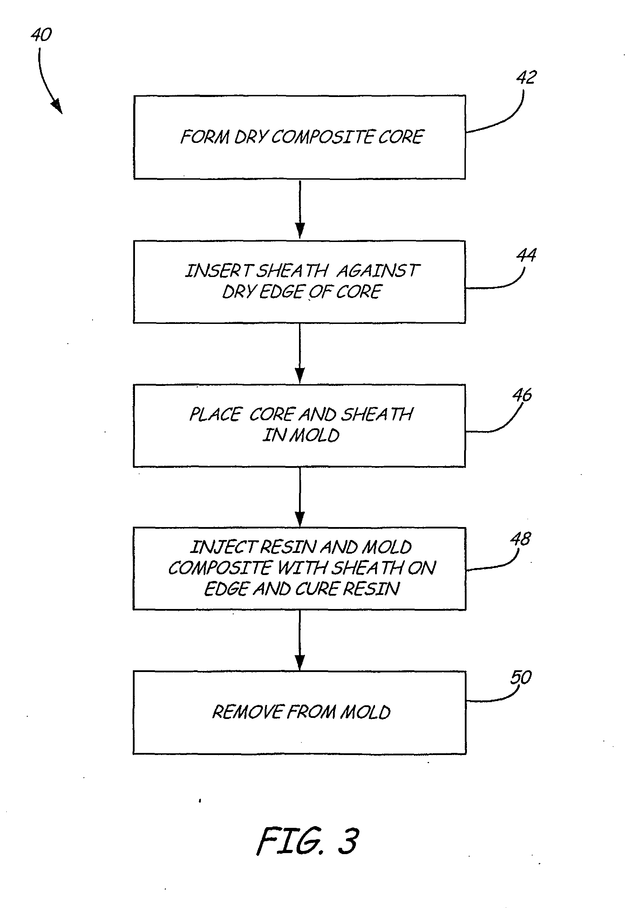

The flow chart of FIG. 3 illustrates method 40 of forming composite blade 10, which includes the steps of forming the woven core and sheath (step 42), placing sheath 17 in the against the desired edge of the composite blade 10 (step 44), placing the woven core 36 in the mould with the sheath 17 on the desired edge (step 46), inserting a resin and curing the composite and sheath in place (step 48), and removing the composite with sheath 17 attached (step 50).

The composite blade 10 is thus formed using a resin transfer moulding process. In this process, the resin is inserted into mould 32 such as in direction arrow A. The resin is cured to produce blade 10 having sheath 17. Plies 38 may be sprayed with an epoxy adhesive, particularly if sheath 17 is made from titanium or a titanium alloy. A film adhesive layer may be applied to the bonding surfaces of sheath 17 before placement in the mould to ensure enhanced bonding properties of a true adhesive are used. Alternatively, the portion of the dry composite may have a film adhesive applied prior to joining the sheath and blade. Any conventional adhesive used to bond metal such as titanium and nickel to materials such as composites may be used in this step. It is also contemplated that no adhesive will be necessary to bond sheath 17 to blade 10 because the resin used to form blade 10 will also adhere to sheath 17 with sufficient strength without an adhesive. Heat is then applied to cure the resin at a low pressure that reduces the potential for movement of the fibres. The resin can be an epoxy polymer resin system or any other resin system conventionally used in resin transfer moulding products such as airfoil blades that operate at high temperatures and other stress inducing conditions.

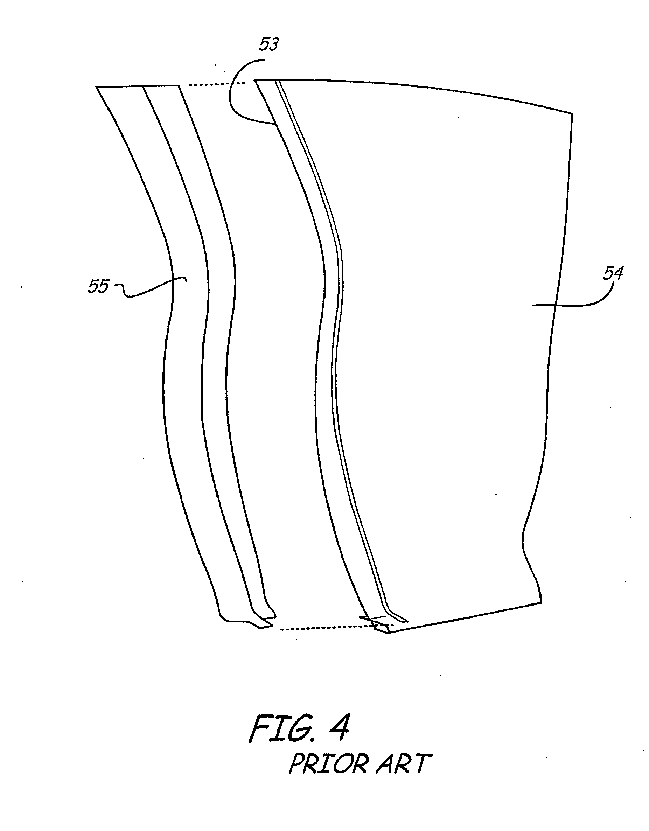

FIG. 4 illustrates a prior art method for placing a protective sheath on a composite blade such as those used in gas turbine engines. A formed blade 54 has an adhesive film placed on the leading edge 53 of blade 54. A leading edge sheath 55 is placed against the adhesive film and the adhesive is cured, thereby bonding the sheath to the blade. This process requires that leading edge 53 of blade 54 and sheath 55 mate together with close tolerances. If the surfaces do not match, impact from birds, hail or other objects ingested by the engine will loosen the sheath prior to its intended operating life. The cost of providing close tolerances and the additional tooling and heating are considerable.

There are a number of benefits obtained by the process of this invention. A blade with a sheath is formed in a single moulding step, thus eliminating the cost of additional tooling and an adhesive bonding and curing step. The junction between the sheath and the blade is improved because they are mated prior to curing the resin that forms the blade, thus ensuring that there is essentially 100% contact between the leading edge of the blade and the sheath itself. The process of this invention can be used with any method of forming a composite blade by injecting and curing a resin, with or without an adhesive as desired. Wear life of sheathed blades according to the process of this invention is improved, due to the complete matching of the surface between the blade and sheath.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of forming a composite blade (10) having a sheath (17) on the blade, the method comprising:
forming a dry composite blade (10) having a leading edge (14), trailing edge (12), tip (20) and root (24);
providing a sheath (17) for protecting a portion of the composite blade (10);
placing the sheath (17) against the portion of the blade (10); and
placing the sheath (17) and dry composite blade (10) in a mould cavity (32), inserting a resin into the mould (32), and curing the resin to produce an integral composite blade (10) and metal sheath (17).

2. The method of claim 1, where the sheath (17) is formed from a metal selected from titanium, nickel, titanium alloys and nickel alloys.

3. The method of claim 1 or claim 2, which further includes the step of placing an adhesive on the portion of the dry composite blade (10) to be protected prior to placing the metal sheath (17) in engagement with the portion.

4. The method of claim 1 or claim 2, which further includes the step of placing an adhesive on portion of the metal sheath (17) that engages the portion of the composite blade (10) to be protected prior to placing the metal sheath (17) in engagement with the portion of the composite blade.

5. The method of any preceding claim, wherein the moulding comprises resin transfer moulding.

6. The method of any preceding claim, wherein the metal sheath (17) is selected to protect at least one of a leading edge (14), tip (20) and trailing edge (12) of the appropriate portion of the dry composite blade (10).

7. The method of claim 6, wherein the metal sheath (17) is selected to protect at least two of a leading edge (14), tip (20) and trailing edge (12).

8. The method of any preceding claim, wherein the composite materials comprise a woven core having a plurality of plies stacked thereon.

9. A composite blade (10) having a sheath (17) on the leading edge (14) of the blade, the blade comprising:
a dry composite blade (10) having a leading edge (14), trailing edge (12), tip (20) and root (24); and
a sheath (17) attached to at least one of the leading edge (14), tip (20) and trailing edge (12), the sheath (17) being positioned in contact with the edge (14) prior to placing the blade (10) and sheath (17) in a mould (32), adding resin and curing the resin to bond the sheath (17) on the leading edge (14), wherein the composite blade (10) and metal sheath (17) are integrally joined by moulding.

10. The composite blade of claim 9, where the sheath (17) is formed from a metal selected from titanium, nickel, titanium alloys and nickel alloys.

11. The composite blade of claim 9 or claim 10, further including an adhesive placed on the portion of the composite blade (10) to which the metal sheath (17) is to be attached prior to placing the metal sheath (17) in engagement with the composite blade (10).

12. The composite blade of claim 9 or claim 10, further including an adhesive placed on the portion of the sheath (17) that engages the portion of the composite blade (10) to which the metal sheath (17) is to be attached prior to placing the metal sheath (17) in engagement with the composite blade (10).

13. The composite blade of any of claims 9 to 12, wherein the composite blade (10) is formed from at least one of a woven core and filament plies.

14. The composite blade of any of claims 9 to 13, wherein the sheath (17) is selected from at least one of a leading edge, tip and trailing edge sheath (17, 21) and the mould is adapted to position at least one sheath (17) in contact with the appropriate portion of the composite blade (10).

15. The composite blade of claim 14, wherein the sheath (17) is selected from at least two of a leading edge, tip and trailing edge sheath (17, 21) to position at least two sheaths in contact with the appropriate portions of the composite blade.
